# EUROPÄISCHE PATENTSCHRIFT

(11) **EP 0 726 856 B1**
(45) Veröffentlichungstag und Bekanntmachung des Hinweises auf die Patenterteilung: **21.01.1998**
(21) Anmeldenummer: 94928866.6
(22) Anmeldetag: 06.10.1994
(51) Int. Cl.: B60T 8/42, B60T 8/34, B60T 8/26

(54) **BREMSANLAGE MIT ELEKTRONISCHER BLOCKIERSCHUTZREGELUNG**
BRAKE SYSTEM WITH ELECTRONIC ANTI-LOCK CONTROL
SYSTEME DE FREINAGE A REGULATION ANTIBLOCAGE ELECTRONIQUE

(30) Priorität: 13.10.1993 DE 4334838
(43) Veröffentlichungstag der Anmeldung: 21.08.1996
(73) Patentinhaber: ITT Automotive Europe GmbH, 60488 Frankfurt (DE)
(72) Erfinder: FEIGEL, Hans-Jörg, D-61191 Rosbach (DE); BUSCHMANN, Gunther, D-65510 Idstein (DE)
(74) Vertreter: Blum, Klaus-Dieter, Dipl.-Ing.
(86) Internationale Anmeldenummer: EP9403300
(87) Internationale Veröffentlichungsnummer: WO9510435

(56) Entgegenhaltungen:
- CH-A- 472 988
- DE-A- 3 109 372
- FR-A- 2 176 105
- GB-A- 1 108 123
- GB-A- 1 187 443
- GB-A- 2 205 910
- GB-A- 2 255 809
- BOSCH TECHNISCHE BERICHTE Band 7 (1980) Heft 2 ISSN 0006-789 X Antiblockiersystem (ABS)

## Beschreibung

Die Erfindung bezieht sich auf eine hydraulische Kraftfahrzeugbremsanlage mit elektronischer Blockierschutzregelung ohne hydraulische Druckquelle, mit einem pedalbetätigten, mehrkreisigen Bremsdruckgeber, mit elektrisch betätigbaren, in den Druckmittelwegen eingefügten Hydraulikventilen, die derart ausgebildet und in den Druckmittelwegen angeordnet sind, daß der Bremsdruck in den Radbremsen der einzelnen Räder individuell steuerbar ist, und mit Niederdruckspeichern, die das in den Bremsdruckabbauphasen aus den Radbremsen abgeleitete Druckmittel aufnehmen und nach dem Lösen der Bremse in den Bremsdruckgeber zurückgeben, wobei Sensoren und/oder Schaltkreise vorhanden sind, mit denen der momentane Inhalt, der Füllgrad der Niederdruckspeicher oder das Restvolumen ständig ermittelt wird, wobei der Druckmittelabfluß aus den Radbremsen in die Niederdruckspeicher im Verlaufe eines Regelungsvorgangs, ausgehend von einem anfangs nur von dem Raddrehverhalten abhängigen Wert, durch Modifikation der Regelung, d.h. des Regelalgorithmus, der Regelungsparameter und/oder der Regelfrequenz, reduziert und begrenzt wird, mit Radsensoren sowie mit elektronischen Schaltungen zur Auswertung der Sensorsignale und zur Erzeugung von Bremsdrucksteuersignalen.

Eine derartige Bremsanlage ist bereits aus der GB-A-1 187 443 bekannt. Es handelt sich dabei um ein druckmittelbetätigtes Bremsensystem, bei dem zur Anpassung des Bremsdruckes an den jeweiligen Kraftschluß zwischen Fahrbahn und Rad eine verstellbare Drosselvorgesehen ist, deren Einstellung die Dauer der Bremsdruckhaltephase im Anschluß an einen regelungsbedingten Bremsdruckabbau bestimmt. Das Bremsensystem enthält einen Speicher mit einer Kammer, die beim Bremsdruckabbau infolge eines Regelungsvorgangs das über ein elektrisch betätigtes Auslaßventil abfließende Druckmittel aufnimmt.

Wenn sich nun nach mehreren Arbeitszyklen die Speicherkammer dieses Bremsensystems füllt, wird über eine Zahnstange der Verschlußkörper der vorgenannten Drossel hineingeschraubt, dadurch der Durchschnittsquerschnitt der Drossel verringert und dadurch die Druck-Haltezeiten im Laufe eines geregelten Bremsvorganges verringert. Nach dem Lösen der Bremse bzw. Beendigen des Bremsvorganges fließt dann das Druckmittel aus der Speicherkammer über ein Rückschlagventil in den Hauptzylinder zurück.

Des weiteren ist in der japanischen Anmeldung JP-A-02 169359 eine zweikreisige hydraulische Bremsanlage beschrieben, die ein elektrisch betätigbares 3/3-Wegeventil zur Regelung des Bremsdruckes in den Hinterradbremsen aufweist. Die Anlage enthält einen Niederdruckspeicher, der das in der Druckabbauphase über das 3/3-Wegeventil abgeleitete Druckmittel aufnimmt und nach Beendigung des Bremsdruckes über ein Rückschlagventil in den Hauptzylinder zurückleitet. Die Regelung ist auf die Hinterräder beschränkt; es handelt sich also nicht um ein vollwertiges Antiblockiersystem.

Schließlich ist aus der DE-A-31 09 372 auch schon eine Bremsanlage bekannt, die eine Blockierschutzregelung aller Räder, wenn auch nicht unabhängig voneinander, vorsieht und bei der zur Verringerung der Herstellungskosten des Systems auf eine Hydraulikpumpe zur Rückförderung des in den Druckabbauphasen aus den Radbremsen abgeleiteten Druckmittels verzichtet wird. Stattdessen wird das über die Auslaßventile abgeführte Druckmittel in einem Niederdruckspeicher aufgenommnen, aus dem es nach dem Lösen der Bremse in die Bremskreise zurückfließt. Es sind zwei Bremskreise mit diagonaler Bremskreisaufteilung vorgesehen. Jeder Bremskreis ist mit einer gemeinsamen Einlaß-/Auslaßventilanordnung und außerdem mit einem weiteren elektrisch umschaltbaren Einlaßventil ausgerüstet ist, das in dem zu der Hinterradbremse führenden Druckmittelweg eingefügt ist. Dieses Einlaßventil ist zum einen in Abhängigkeit von der Blockierschutzregelung und zum anderen lastabhängig in seine Sperrstellung umschaltbar.

Wenn eines der vier Fahrzeugräder zu blockieren beginnt, werden gleichzeitig beide zu den Hinterrädern führenden Ventile auf Sperren umgeschaltet. Dadurch soll sichergestellt werden, daß wenigstens ein Hinterrad stabil bleibt. Sobald ein zweites Rad Blockiertendenz zeigt, wird zusätzlich zu dem weiterhin aufrechterhaltenen Absperren der Hinterräder in einem der beiden Kreise der Bremsdruck abgesenkt und dann konstant gehalten. Gleichbleibende Fahrbahnverhältnisse vorausgesetzt, wird an diesem Schaltzustand bis zum Ende des Bremsvorganges nichts mehr geändert. Aus Sicherheitsgründen wird zur gleichen Zeit jeweils nur der hydraulische Druck in einem der beiden diagonalen Bremskreise reduziert. Es handelt sich um eine recht primitive Regelung, die zeitweise das Blockieren von Rädern, zeitweise die Unterbremsung der Räder in Kauf nimmt.

Der vorliegenden Erfindung liegt die Aufgabe zugrunde, eine blockiergeschützte Bremsanlage zu entwickeln, die ebenfalls ohne eine hydraulische Energiequelle auskommt und deren Funktion dennoch in den meisten, vor allem in den kritischen Situationen, hinter der Funktion eines "vollwertigen" ABS nicht zurücksteht. Der Erhalt der Fahrstabilität und die Funktionssicherheit des Bremsensystems sollte in allen Situationen gewährleistet sein.

Es hat sich gezeigt, daß sich diese Aufgabe mit der im Anspruch 1 beschriebenen Weiterbildung der eingangs genannten Bremsanlage lösen läßt. Danach besteht die Besonderheit der erfindungsgemäßen Bremsanlage darin, daß zwei hydraulisch getrennte Bremskreise mit diagonaler Bremskreisaufteilung vorgesehen sind und daß pro Bremskreis ein Niederdruckspeichervorhanden ist, der zwei getrennte Eingänge für den Anschluß des Hinterrades und des Vorderrades aufweist und derart ausgebildet ist, daß beim Erreichen eines vorgegebenen Füllgrades oder Restvolumens des Speichers der Druckmittelzufluß aus der Vorderradbremse gesperrt wird.

Die Erfindung geht von der Erkenntnis aus, daß grundsätzlich die Dauer einer ABS-Regelbremsung auf eine kurze Zeitspanne begrenzt ist und daß nur zu Beginn der Bremsung der eigentliche, fahrdynamisch kritische Zustand vorliegt. Mit fortschreitender Dauer der Bremsung und abnehmender Geschwindigkeit des Fahrzeugs wird der Fahrzustand unkritischer. Beim Bremsen in einer Kurve nimmt der Bedarf an Seitenführungskraft mit der Verringerung der Fahrzeuggeschwindigkeit ab. Lenkmanöver müssen vor allem kurz nach dem Einleiten einer ABS-Bremsung möglich sein, um einem Hindernis frühzeitig ausweichen zu können.

Außerdem ändern sich in den meisten Fällen die Umstände kurz nach Beginn einer Regelbremsung derart, daß eine maximale Verzögerung nicht mehr erforderlich ist; die Bremsung wird bei noch fahrendem Fahrzeug beendet, oder zumindest die Verzögerung so stark zurückgenommen, daß der Kraftschlußbedarf nicht mehr den zur Verfügung stehenden Reibwert zwischen Reifen und Fahrbahn überschreitet. In anderen Situationen kommt das Fahrzeug nach kurzer Zeit zum Stillstand. Hierbei ist die Dauer einer Regelbremsung abhängig von der Ausgangsgeschwindigkeit und dem Reibwert zwischen Reifen und Fahrbahn.

Aus diesen Gegebenheiten folgt, daß mit fortschreitender Dauer einer Bremsung die Anforderungen an die ABS-Regelungsfunktion zurückgenommen werden können. Hiervon macht die Erfindung Gebrauch.

Durch die erfindungsgemäß vorgesehene Verwendung eines Niederdruckspeichers mit getrennten Eingängen für das Vorderrad und für das Hinterrad der Diagonalen, steht zwangsläufig in allen Situationen ein "Sicherheitsvolumen" des Speichers zur Regelung des Bremsdruckes in den Hinterradbremsen zur Verfügung. Zur Erhaltung der Fahrstabilität in kritischen Situationen ist dies von entscheidender Bedeutung. Die Vorderräder könnten im ungünstigsten Fall, der eher theoretische als praktische Bedeutung haben dürfte, zum Blokieren tendieren; ein Entbremsen,d.h. zu hoher Bremsdruckabbau, kann nicht eintreten.

Nach einer vorteilhaften Ausführungsart der Erfindung ist die Radbremse jedes Rades über eine separate Ventilanordnung, die aus zwei als Ein-/und Auslaßventile dienende 2/2-Wegeventile besteht oder in Form eines 3/3-Wegeventils ausgebildet ist, an den Hauptzylinder angeschlossen, wobei die beiden Auslaßventile eines Bremskreises bzw. die Auslaßventilwege jeweils zu einem gemeinsamen Niederdruckspeicher führen. Weiterhin ist es möglich, den Niederdruckspeicher zusätzlich über jeweils ein Rückschlagventil, das sich zum Bremsdruckgeber hin öffnet, an den zugehörigen Bremskreis anzuschließen. Über dieses Rückschlagventil kann sich der Niederdruckspeicher nach dem Lösen der Bremse entleeren.

Bei entsprechender Ausbildung der Einlaß-/und Auslaßventile kann die Entleerung des Niederdruckspeichers auch über diese Ventile, die dann nach dem Lösen der Bremse angesteuert werden müssen, erfolgen. Das vorgenannte Rückschlagventil, das sich zum Bremsdruckgeber hin öffnet, ist in diesem Fall entbehrlich.

Der Füllgrad des Niederdruckspeichers bzw. das Restvolumen wird zweckmäßigerweise durch Messen und Auswerten der den Druckmittelzufluß in den Niederdruckspeicher bestimmenden Größen ermittelt. Hierzu werden die Ventilschaltzeiten, der Bremsdruck oder eine den Bremsdruck indirekt wiedergebende Größe unter Berücksichtigung der System-Kennlinien ausgewertet.

Nach einer weiteren vorteilhaften Ausführungsart der erfindungsgemäßen Bremsanlage weist der Niederdruckspeicher einen bei Volumenaufnahme gegen den Druck einer Feder verschiebbaren Kolben auf, dessen Position und Weg mit Hilfe eines Wegsensors ermittelt wird. Zweckmäßigerweise steht in diesem Fall der Kolben des Niederdruckspeichers mit einem Ventilglied in Verbindung, das den Zufluß von Druckmittel aus der Vorderradbremse in den Niederdruckspeicher sperrt, sobald der Kolben eine Position erreicht, die einem vorgegebenen Füllgrad entspricht.

Ferner können erfindungsgemäß Schaltkreise oder Schaltschritte vorgesehen sein, die den Druckmittelabfluß in den Niederdruckspeicher nach dem Einsetzen einer Blockierschutzregelung durch eine oder mehrere der folgenden Maßnahmen begrenzen:
- Verringerung der Regelungsfrequenz mit fortschreitender Dauer der Blockierschutzregelung,
- Einstellung eines annähernd konstanten Hinterachsdruckes,
- Erhöhen der Radschlupf-Regelschwellen in Abhängigkeit von dem Straßenzustand an einem oder an mehreren Rädern,
- Reduzieren der Regelungsfunktion an den Vorderrädern mit abnehmender Fahrzeuggeschwindigkeit.

Auf diese Weise läßt sich wirkungsvoll der Druckmittelabfluß aus den Radbremsen im Verlauf eines Regelungsvorganges ohne Einschränkung der Funktion der geregelten Bremsung verringern.

Ferner kann es von Vorteil sein, als Hydraulikventile stromgeregelte Mehrwege-Ventile vorzusehen, die in Abhängigkeit von der Ansteuerung eine vorgegebene Druckänderung hervorrufen.

Schließlich besteht ein Ausführungsbeispiel der Erfindung noch darin, die Regelungsstrategie oder Regelungsphilosophie in Abhängigkeit von dem Füllgrad des Niederdruckspeichers und/oder der Dauer der Blockierschutzregelung in mehreren Stufen zu modifzieren, und zwar ausgehend von einer uneingeschränkten ABS-Funktion hin zu einer Regelungsweise mit geringerem Druckmitteldurchsatz.

Weitere Merkmale, Vorteile und Anwendungsmöglichkeiten der Erfindung gehen aus der folgenden Beschreibung von Ausführungsbeispielen anhand der beigefügten Abbildung hervor.

Es zeigen
- Figur 1: in schematischer Darstellung die wesentlichen hydraulischen Komponenten einer Bremsanlage nach der Erfindung und
- Figur 2: im Schnitt und als Funktionsbild eine weitere Ausführungsart eines Niederdruckspeichers der Bremsanlage nach der Erfindung.

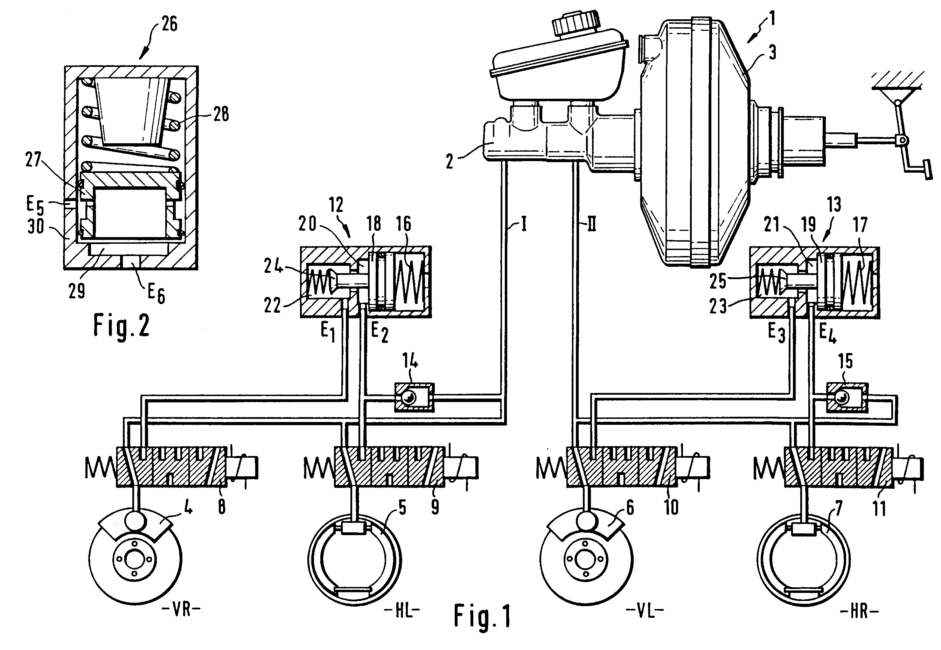

Nach Figur 1 besteht die Bremsanlage nach der Erfindung im wesentlichen aus einem pedalbetätigten Bremsdruckgeber 1, der sich hier aus einem Tandem-Hauptzylinder 2 mit einem vorgeschalteten Unterdruckverstärker 3 zusammensetzt und an den über zwei hydraulisch getrennte Bremskreise I, II die Radbremsen 4-7 der Fahrzeugräder in diagonaler Bremskreisaufteilung angeschlossen sind. An den Bremskreis I sind die Radbremsen des rechten Vorderrades VR und des linken Hinterrades HL, an den Bremskreis II die Radbremsen der beiden anderen Räder VL, HR angeschlossen. In den Druckmittelwegen zu den Radbremsen liegen im vorliegenden Ausführungsbeispiel je ein elektrisch steuerbares 3/3-Mehrwege-Ventil 8 bis 11. Jeder Bremskreis I, II ist mit einem Niederdruckspeicher 12, 13 ausgerüstet, zu dem die Rückflußwege der 3/3-Wegeventile 8-11 nach Umschalten dieser Ventile in die entsprechende Position führen.

Diese Niederdruckspeicher 12, 13 besitzen hydraulisch getrennte Eingänge E₁, E₂ bzw. E₃, E₄ zum getrennten Anschluß der Vorderräder und der Hinterräder. Schließlich ist noch eine mit einem Rückschlagventil 14, 15 abgesicherte Rückflußleitung vorgesehen, die den jeweiligen Niederdruckspeicher 12 bzw. 13 mit dem Bremskreis I bzw. II verbindet und über die nach dem Lösen der Bremse das Druckmittel aus den Niederdruckspeichern 12 bzw. 13 in die Bremskreise I, II bzw. in den Hauptzylinder 2 zurückfließt.

Die elektrischen Komponenten der Bremsanlage sind nicht gezeigt. Jedes Rad VR, HL, VL, HR ist in gewohnter Weise mit einem (nicht dargestellten) Radsensor ausgerüstet, der dem Raddrehverhalten entsprechende elektrische Signale erzeugt. In einer ebenfalls nicht dargestellten elektronischen Regelschaltung werden die Sensorsignale ausgewertet, um die für die Regelung erforderlichen Bremsdrucksteuersignale zu gewinnen. Mit diesen Bremsdrucksteuersignalen werden die elektromagnetisch betätigbaren 3/3-Wegeventile 8 bis 11 zur Bremsdruck- bzw. Blockierschutzregelung angesteuert.

Die Niederdruckspeicher 12, 13 der Bremsanlage nach Figur 1 besitzen einen gegen die Kraft einer Feder 16, 17 verschiebbaren Kolben 18, 19, der eine Speicherkammer 20, 21 begrenzt. An dieser Speicherkammer 20, 21 ist die Hinterradbremse 5, 7 in der Bremsdruck-Abbauphase über den Eingang E₂, E₄ des Speichers 12, 13 direkt angeschlossen. Der Anschluß E₁, E₃ der Vorderradbremse 4, 6 mündet dagegen in den Speicherraum 20, 21 über eine Kammer 22, 23, die von einem Ventilglied 24, 25 verschlossen wird, sobald ein vorgegebener Füllgrad der Speicherkammer 20, 21 bzw. des Niederdruckspeichers 12, 13 erreicht ist. Dieser Füllgrad kann je nach Ausführungsart der Bremsanlage und nach den vorgegebenen Sicherheitsanforderungen einen Wert in einem Bereich zwischen 60 und 90 %, vorzugsweise zwischen 70 und 85 %, annehmen. Nach Erreichen des vorgegebenen Füllgrades kann dann in der Druckabbauphase, d. h. nach dem Umschalten der 3/3-Wegeventile in ihre dritte Position, nur noch Druckmittel über den Auslaßweg des jeweiligen Ventils 9, 11 abfließen; es ist also nur noch Druckabbau an den Hinterrädern HL, HR möglich. Der Druck in den Radbremsen 4, 6 der Vorderräder VR, VL wird dagegen in dieser Phase konstantgehalten.

Der Füllzustand des Niederdruckspeichers 12, 13 kann grundsätzlich auch durch Messen und Auswerten der Ventilansteuerzeiten unter Berücksichtigung der Ventil- und Speicherkennlinien ermittelt werden. Bei der Bildung eines solchen "Volumenmodells" wird zweckmäßigerweise auch der während der Regelung in den Bremskreisen I, II herrschende Bremsdruck berücksichtigt, der wiederum in bekannter Weise durch Drucksensoren gemessen oder durch Auswerten der beim Einsetzen der Regelung herrschenden Fahrzeugverzögerung oder nach anderen bekannten Kriterien ermittelt werden kann. Schließlich ist es natürlich auch möglich, den Weg und die Position des bei Volumenaufnahme und -abgabe axial verschiebbaren Kolbens 18, 19 des Speichers 12, 13 mit Hilfe eines (nicht dargestellten) Wegsensors zu messen, um ein Maß für den Füllgrad des Speichers 12, 13 zu erhalten. Von dem erforderlichen Herstellungsaufwand und den Forderungen an die Genauigkeit der Füllgradermittlung wird es letzten Endes abhängen, welche der genannten Maßnahmen zur Anwendung kommen.

Figur 2 zeigt das Funktionsbild eines Niederdruckspeichers 26, der anstelle der Speicher 12, 13 für die Bremsanlage nach Figur 1 verwendet werden kann. Der Anschluß für die Radbremse des Vorderrades ist Figur 2 mit E₅, für die Radbremse des Hinterrades mit E₆ bezeichnet. Der in Abhängigkeit von dem Füllgrad des Niederdruckspeichers 26 axial verschiebbare Kolben 27 ist becherförmig ausgebildet. Am Becherboden greift eine Rückstellfeder 28 an, die der Feder 16 (17) des beschriebenen Speichers 12 (13) entspricht. Über eine Öffnung in der Wandung des Kolbens 27 und in der Gehäusewandung 30 des Speichers 26 ist der Speicherraum 29 und der Innenraum des Kolbens 27 mit dem Anschluß E₅ für die Vorderradbremse verbunden. Dieser Anschluß ist aber nur so lange offen, bis der durch Volumenaufnahme axial verschobene Kolben 27 eine Position eingenommen hat, in der seine Wandung den Anschluß E₅ verschließt. Nach dem Überschreiten dieses Schwellwertes steht das restliche Speichervolumen nur noch zur Aufnahme von Druckmittel über den Eingang E₆, der in der Druckabbauphase mit der Radbremse des Hinterrades in Verbindung steht, zur Verfügung. Der Speicher 26 unterscheidet sich nur in seinem Aufbau, nicht jedoch in seiner Funktion von den Niederdruckspeichern 12, 13 in Figur 1.

Die Bremsanlage nach der Erfindung arbeitet wie folgt:

Vor dem Einsetzen der Blockierschutzregelung nehmen die Ventile 8 bis 11 die in Figur 1 gezeigten Positionen ein, in der ein ungehinderter Bremsdruckaufbau und -abbau über die Einlaßwege der Ventile gegeben ist. Die Niederdruckspeicher 12, 13, 26, sind zunächst leer. Beim Einsetzen der Regelung wird das 3/3-Wegeventil, das zu dem instabil gewordenen Rad gehört, angesteuert. In einer mittleren Schaltposition der Ventile 8-11 wird ein weiterer Druckanstieg unterbunden, in der dritten Schaltposition ein Druckabbau über den Auslaßweg des entsprechenden Ventils 8 bis 11 zugelassen. In bekannter Weise wird durch Bemessung der Ansteuerzeiten der Druckverlauf in den Radbremsen 4-7 festgelegt. Nach dem Lösen der Bremse 1, d. h. Freigeben des Bremspedals, fließt das von den Niederdruckspeichern 12, 13 aufgenommene Druckmittel durch Einwirkung der Rückstellfedern 16, 17 über die Rückschlagventile 14, 15 in den Hauptzylinder 2 zurück.

Zu Beginn einer Regelbremsung entspricht die Funktion der erfindungsgemäßen Bremsanlage vollständig einem "Voll-ABS", d. h. einem mit einer Rückförderpumpe ausgerüstetem Antiblockiersystem. Auf hohem Reibwert und in anderen Regelsituationen mit geringem "Druckabbaubedarf" besteht für den gesamten Bremsvorgang kein Unterschied zu der Funktion eines Voll-ABS. Bei Regelbremsungen mit höherem Druckabbaubedarf muß die Regelung dem begrenzten Speichervolumen der Niederdruckspeicher 12, 13, 26 Rechnung tragen. Im Verlauf der Regelung wird dahe der "Volumendurchsatz" durch Modifikation der Regelung drastisch reduziert. Durch Verzögerung des Druckwiederaufbaus im Verlauf der Regelung und Verlängerung der Druck-Konstanthaltephasen wird die Regelfrequenz reduziert. Dies führt insbesondere bei homogenen Fahrbahnverhältnissen zu keiner wesentlichen Einschränkung der Regelbremsung oder Verlängerung des Bremsweges.

Die Regelung kann außerdem, ähnlich wie bei einer elektronischen Bremskraftverteilung, derart ausgelegt, daß der Bremsdruck in den Hinterradbremsen dicht am Optimum des Kraftschlußes für die Dauer des Bremsvorganges konstant gehalten wird.

Ferner ist es möglich, mit zunehmender Dauer der Regelung die Schlupfschwellen der Räder in Abhängigkeit von dem momentanen Seitenkraftbedarf, z. B bei µ-Split die Schlupfschwelle für das Rad auf der Niedrigreibwert-Seite, anzuheben; dadurch setzt der Druckabbau erst bei Erreichen eines höheren Schlupfes ein. In dieser Situation wird durch das aufrechterhaltene Regeln am diagonal zugeordneten Hinterrad die Fahrstabilität gesichert.

Eine weitere Maßnahme zur Verringerung des Volumendurchsatzes besteht darin, die Regelungsfunktion an der Vorderachse mit abnehmender Fahrgeschwindigkeit zu verringern. Die Lenkfähigkeit im unteren Geschwindigkeitsbereich wird dadurch gegebenenfalls etwas vermindert, die Fahrstabilität jedoch in vollem Umfang aufrechterhalten.

Es sind weitere, von der jeweiligen Fahrsituation abhängige Maßnahmen zur Verringerung des Volumendurchsatzes bzw. des Druckabbaubedarfs möglich, die durch entsprechende Auslegung oder Programmierung des Reglers verwirklicht werden können. Bei allen Maßnahmen hat die Fahrstabilität Vorrang. Der Einlauf in einen hohen Schlupf oder gar ein kurzzeitiges Blockieren kann erforderlichenfalls ohne wesentliche Einschränkung der Regelungsgüte in bestimmten Situationen in Kauf genommen werden.

Die beschriebene Bremsanlage enthält Niederdruckspeicher mit getrennten Eingängen für den Anschluß der Hinterrad- und der Vorderradbremsen. Die Besonderheit dieser Ausführungsart besteht darin, daß der Anschluß des Speichers an den Rücklaufventilweg des Vorderrades in Abhängigkeit von dem Füllgrad des Niederdruckspeichers abgesperrt wird. Wird dieser vorgegebene Grenzwert der Füllung des Niederdruckspeichers erreicht und überschritten, dann ist in der vorderen Radbremse kein weiterer Druckabbau mehr möglich. An der hinteren Radbremse kann jedoch noch so lange Druck abgebaut werden, bis der Niederdruckspeicher vollständig gefüllt ist. Die Regelung wird in diesem Fall dieser Besonderheit angepaßt und derart verändert, daß die Fahrstabilität gesichert bleibt, ohne daß das im Niederdruckspeicher für den Druckabbau zur Verfügung stehende freie Restvolumen aufgebraucht wird, bevor das Fahrzeug zum Stillstand kommt. Es ist also eine Sicherheitsreserve vorhanden.

Erfindungsgemäß wird also durch Verwendung der Niederdruckspeicher bei gleichzeitig "sparsamen" Umgang mit dem Druckabbau und durch Modifikation der Regelungsweise bzw. Regelungsstrategie in Abhängigkeit von der Regelungsdauer und von dem Füllgrad der Niederdruckspeicher ein Verzicht auf Hydraulikpumpen ohne wesentliche Einschränkung der Regelungsweise erreicht. Zu Beginn der Regelung, solange ein ausreichend großes Restvolumen zum Ablassen von Bremsflüssigkeit aus der Radbremsen in die Niederdruckspeicher zur Verfügung steht, gibt es keinerlei Einschränkungen in der ABS-Funktion gegenüber einem ABS mit Energieversorgung ("Voll-ABS"). Sobald die Grenzwerte des Füllgrades überschritten werden, wird die Regelung mit dem Ziel möglichst geringen Druckmittelabflusses über die Ventil-Auslaßwege modifiziert.

Der Füllgrad der Speicher und das Überschreiten bestimmter Grenzwerte kann im Prinzip durch
- Volumenmodellbildung in der Systemlogik,
- durch weggesteuerte Ventile im Niederdruckspeicher und/oder
- durch Wegsensoren im Niederdruckspeicher
verwirklicht werden. Zur Volumenmodellbildung wird der Raddruck, die Volumenaufnahme der Radbremsen, die Druckabbaugradienten, die Ansteuerzeiten der Ventile und die durch die geometrische Gestaltung vorgegebenen Kennlinien des Systems und der Speicher ausgewertet. Mit den weggesteuerten Ventilen wird in Abhängigkeit vom Fülldruck des Niederdruckspeichers selbsttätig der weitere Druckabbau an den Vorderrädern unterbunden. Eine Verringerung der Seitenführungskraft oder gar ein Blockieren des Rades bei fortgeschrittener Regelung kann erforderlichenfalls in Kauf genommen werden.

## Patentansprüche

1. Hydraulische Kraftfahrzeugbremsanlage mit elektronischer Blockierschutzregelung ohne hydraulische Druckquelle, mit einem pedalbetätigten, mehrkreisigen Bremsdruckgeber (1), mit elektrisch betätigbaren, in den Druckmittelwegen eingefügten Hydraulikventilen (8 - 11), die derart ausgebildet und in den Druckmittelwegen angeordnet sind, daß der Bremsdruck in den Radbremsen (4-7) der einzelnen Räder (VR, HL; VL, HR) individuell steuerbar ist, und mit Niederdruckspeichern (12,13,26), die das in den Bremsdruckabbauphasen aus den Radbremsen abgeleitete Druckmittel aufnehmen und nach dem Lösen der Bremse in den Bremsdruckgeber zurückgeben, wobei Sensoren und/oder Schaltkreise vorhanden sind, mit denen der momentane Inhalt, der Füllgrad der Niederdruckspeicher (12, 13, 26) oder das Restvolumen ständig ermittelt wird, wobei der Druckmittelabfluß aus den Radbremsen (4-7) in die Niederdruckspeicher (12, 13, 26) im Verlaufe eines Regelungsvorgangs, ausgehend von einem anfangs nur von dem Raddrehverhalten abhängigen Wert, durch Modifikation der Regelung, d.h. des Regelalgorithmus, der Regelungsparameter und/oder der Regelfrequenz, reduziert und begrenzt wird, mit Radsensoren sowie mit elektronischen Schaltungen zur Auswertung der Sensorsignale und zur Erzeugung von Bremsdrucksteuersignalen, dadurch **gekennzeichnet**, daß zwei hydraulisch getrennte Bremskreise (I, II) mit diagonaler Bremskreisaufteilung vorgesehen sind und daß pro Bremskreis ein Niederdruckspeicher (12,13,26) (I,II) vorhanden ist, der jeweils zwei getrennte Eingänge(E₁, E₂; E₃, E₄; E₅, E₆) für den Anschluß des Hinterrades und des Vorderrades aufweist und derart ausgebildet ist, daß beim Erreichen eines vorgegebenen Füllgrades oder Restvolumens des Speichers (12, 13, 26) der Druckmittelzufluß aus der Vorderradbremse (4, 6) gesperrt wird.

2. Bremsanlage nach Anspruch 1, dadurch **gekennzeichnet**, daß die Hydraulikventile (8 - 11) in Form von separaten Ventilanordnungen ausgebildet sind, an die jeweils die die Radbremse (4-7) eines Rades angeschlossen ist und die jeweils aus zwei, als Einlaß- und Auslaßventile diendende 2/2-Wegeventile oder aus 3/3-Wegeventilen (8 - 11) bestehen, wobei die beiden Auslaßventile eines Bremskreises bzw. die beiden Auslaßventilwege jeweils zu den gemeinsamen Niederdruckspeichern (12,13,26) führen.

3. Bremsanlage nach Anspruch 2, dadurch **gekennzeichnet**, daß die Niederdruckspeicher (12, 13, 26) jeweils über ein Rückschlagventil (14, 15), das sich zu dem Bremsdruckgeber (1) hin öffnet, an den zugehörigen Bremskreis (I, II) angeschlossen sind.

4. Bremsanlage nach Anspruch 1 oder 2, dadurch **gekennzeichnet**, daß die Niederdruckspeicher (12, 13, 26) über die Hydraulikventile entleert werden, die hierzu nach Lösen der Bremse mit einem Signal vorgebener Dauer oder mit Signalen in Form einer Pulsfolge angesteuert werden.

5. Bremsanlage nach einem oder mehreren der Ansprüche 1 bis 4, dadurch **gekennzeichnet**, daß der Füllgrad des Niederdruckspeichers (12, 13, 26) durch Messen und Auswerten der den Druckmittelzufluß in den Niederdruckspeicher (12, 13, 26) bestimmenden Größen näherungsweise ermittelt wird.

6. Bremsanlage nach Anspruch 5, dadurch **gekennzeichnet**, daß zur Ermittlung des Füllgrades die Ventilschaltzeiten, der Bremsdruck oder eine den Bremsdruck indirekt wiedergebende Größe unter Berücksichtigung der Ventil- und/oder System-Kennlinien, z. B. der Niederdruckspeicher-Kennlinien, ausgewertet werden.

7. Bremsanlage nach einem oder mehreren der Ansprüche 1 bis 4, dadurch **gekennzeichnet**, daß der Niederdruckspeicher (12, 13, 26) einen bei Volumenaufnahme gegen den Druck einer Feder (16, 17, 28) verschiebbaren Kolben (18, 19, 27) aufweist, dessen Position und Weg mit Hilfe eines Wegsensors ermittelt wird.

8. Bremsanlage nach Anspruch 7, dadurch **gekennzeichnet**, daß der Kolben (18, 19) des Niederdruckspeichers (12, 13) mit einem Ventilglied (24, 25) in Verbindung steht, das den Zufluß von Druckmittel aus der Vorderradbremse (4, 6) in den Niederdruckspeicher (12, 13) sperrt, sobald der Kolben (18, 19) eine Position erreicht, die einem vorgegebenen Füllgrad entspricht.

9. Bremsanlage nach einem oder mehreren der Ansprüche 1 bis 8, dadurch **gekennzeichnet**, daß Schaltkreise oder, bei Verwendung von programmierbaren Schaltungen, Schaltschritte vorgesehen sind, die den Druckmittelabfluß in den Niederdruckspeicher (12, 13, 26) nach dem Einsetzen eines Blockierschutzregelungsvorganges durch eine oder mehrere der folgenden Maßnahmen begrenzen:
- Verringerung der Regelungsfrequenz mit fortschreitender Dauer der Blockierschutzregelung,
- Einstellung eines annähernd konstanten Hinterachsdruckes,
- Erhöhen der Radschlupf-Regelschwellen in Abhängigkeit von dem Straßenzustand an einem oder an mehreren Rädern,
- Reduzieren der Regelungsfunktion an den Vorderrädern mit abnehmender Fahrzeuggeschwindigkeit.

10. Bremsanlage nach einem oder mehreren der Ansprüche 1 bis 9, dadurch **gekennzeichnet**, daß als Hydraulikventile (8-11) stromgeregelte Mehrwegeventile vorgesehen sind, die in Abhängigkeit von der Ansteuerung eine vorgegebene Druckänderung hervorrufen.

11. Bremsanlage nach einem oder mehreren der Ansprüche 1 bis 10, dadurch **gekennzeichnet**, daß die Regelungsstrategie oder Regelungsphilosophie in Abhängigkeit von dem Füllgrad der Niederdruckspeicher (12, 13, 26) und/oder der Dauer der Blockierschutzregelung in mehreren Stufen -von einer uneingeschränkten Blockierschutzfunktion, bei der der der Druckmitteldurchsatz bei Druckabbau nicht eingeschränkt ist, bis zu einer Regelungsweise mit geringem Druckmitteldurchsatz modifiziert wird.

## Claims

1. A hydraulic automotive vehicle brake system with electronic anti-lock control without a hydraulic pressure source, including a pedal-operated multi-circuit braking pressure generator (1), electrically operable hydraulic valves (8-11) which are designed and inserted in pressure fluid conduits so that the braking pressure in the wheel brakes (4-7) of the respective wheels (VR, HL; VL, HR) is controllable individually, and low-pressure accumulators (12, 13, 26) which accumulate the pressure fluid that is withdrawn from the wheel brakes in the periods of braking pressure reduction and return the pressure fluid to the braking pressure generator after brake release, wherein sensors and/or circuits are provided to constantly determine the instantaneous contents, the filling ratio of the low-pressure accumulators (12, 13, 26) or the residual volume, wherein the pressure fluid discharge from the wheel brakes (4-7) to the low-pressure accumulators (12, 13, 26) is reduced and limited in the course of a control operation by modification of the control, i.e., the control algorithm, the control parameters and/or the control frequency, starting from a value which, initially, is only responsive to the wheel rotational behavior, and further including wheel sensors and electronic circuits to evaluate the sensor signals and to generate braking pressure control signals,
**characterized** in that two hydraulically isolated brake circuits (I, II) in a diagonal brake circuit arrangement are provided, and in that one low-pressure accumulator (12, 13, 26) per brake circuit (I, II) is provided which has two separate inlets (E₁, E₂; E₃, E₄; E₅, E₆) for the connection of the rear wheel and the front wheel and is designed so that the pressure fluid flow from the front-wheel brake (4, 6) is shut off when a predetermined filling ratio or residual volume in the accumulator (12, 13, 26) is reached.

2. A brake system as claimed in claim 1,
**characterized** in that the hydraulic valves (8-11) take the form of separate valve assemblies connected to the wheel brake (4-7) of each wheel and including two two-way/two-position directional control valves, serving as inlet and outlet valves, or one three-way/three-position directional control valve (8-11), wherein the two outlet valves of a brake circuit or the two outlet valve conduits lead to the common low-pressure accumulators (12, 13, 26).

3. A brake system as claimed in claim 2,
**characterized** in that the low-pressure accumulators (12, 13, 26) are connected to the associated brake circuit (I, II) by way of a non-return valve (14, 15) which opens towards the braking pressure generator (1).

4. A brake system as claimed in claim 1 or claim 2,
**characterized** in that the low-pressure accumulators (12, 13, 26 ) are evacuated by way of hydraulic valves which are driven by a signal of predetermined length or by signals in the form of a pulse train after brake release.

5. A brake system as claimed in any one or more of claims 1 to 4,
**characterized** in that the filling ratio in the low-pressure accumulator (12, 13, 26) is determined in approximation by measuring and evaluating the quantities which define the supply flow of pressure fluid to the low-pressure accumulator (12, 13, 26).

6. A brake system as claimed in claim 5,
**characterized** in that the valve operating times, the braking pressure, or a quantity indirectly representative of the braking pressure is evaluated to determine the filling ratio, in consideration of the characteristic curves of the valves and/or the system, for example, the low-pressure accumulator characteristic curves.

7. A brake system as claimed in any one or more of claims 1 to 4,
**characterized** in that the low-pressure accumulator (12, 13, 26) has a piston (18, 19, 27) which is movable in opposition to the pressure of a spring (16, 17, 28), and the position and travel of the piston is determined by a travel sensor.

8. A brake system as claimed in claim 7,
**characterized** in that the piston (18, 19) of the low-pressure accumulator (12, 13) is connected to a valve member (24, 25) which shuts off the supply flow of pressure fluid from the front-wheel brake (4, 6) to the low-pressure accumulator (12, 13) as soon as the piston (18, 19) reaches a position which corresponds to a predetermined filling ratio.

9. A brake system as claimed in any one or more of claims 1 to 8,
**characterized** in that circuits, or circuit stages, when programmed circuits are used, are provided which limit the pressure fluid discharge to the low-pressure accumulator (12, 13, 26) after the commencement of an anti-lock control operation by one or a plurality of the following provisions:
- reduction of the control frequency with growing duration of anti-lock control,
- adjustment of an approximately constant rear-axle pressure,
- rise of the wheel slip control thresholds on any one or more of the wheels in response to road conditions,
- reduction of the control function on the front wheels with decreasing vehicle speed.

10. A brake system as claimed in any one or more of claims 1 to 9,
**characterized** in that the hydraulic valves (8-11) are flow-controlled multi-way valves which cause a predetermined pressure variation as a function of their operation.

11. A brake system as claimed in any one or more of claims 1 to 10,
**characterized** in that the control strategy or control philosophy is modified in several steps in response to the filling ratio of the low-pressure accumulators (12, 13, 26) and/or the duration of anti-lock control, starting from an unrestricted anti-lock function, where the rate of pressure fluid flow is not restricted during pressure reduction, to a type of control with a low rate of pressure fluid flow.

## Revendications

1. Système de freinage hydraulique pour véhicule automobile, avec une régulation électronique de protection antiblocage des roues, sans source de pression hydraulique, comportant un générateur (1) de pression de freinage multi-circuit, actionné par pédale, comprenant des soupapes hydrauliques (8 à 11) à commande électrique, insérées dans les chemins d'écoulement du fluide de pression, qui sont configurées et disposées dans les chemins d'écoulement du fluide hydraulique de manière telle que la pression de freinage régnant dans les freins de roues (4 à 7) des différentes roues (VR, HL; VL, HR) puisse être réglée individuellement, et comprenant des accumulateurs basse pression (12, 13, 26) qui reçoivent le fluide de pression évacué des freins de roues pendant les phases de diminution de la pression de freinage, et le renvoient au générateur de pression de freinage après le relâchement du frein, et comprenant des capteurs et/ou circuits de commande qui permettent de déterminer en permanence le contenu momentané, le degré de remplissage des accumulateurs basse pression (12, 13, 26), ou le volume restant, l'évacuation de fluide de pression des freins de roues (4 à 7) vers les accumulateurs basse pression (12, 13, 26) étant réduite et limitée au cours d'une opération de régulation, en partant d'une valeur dépendant initialement seulement du comportement de rotation de la roue, en modifiant la régulation, c'est-à-dire, l'algorithme de régulation, les paramètres de régulation, et/ou la fréquence de régulation, et comportant ensuite des capteurs de roue ainsi que des circuits de commande électroniques destinés à analyser les signaux des capteurs et à générer des signaux de réglage de la pression de freinage,
caractérisé en ce que deux circuits de freinage (I, II) hydrauliquement séparés l'un de l'autre sont prévus, présentant une répartition diagonale des circuits de freinage, et en ce qu'un accumulateur basse pression (12, 13, 26) est prévu pour chaque circuit de freinage (I, II), présente respectivement deux entrées séparées (E₁, E₂; E₃, E₄; E₅, E₆) pour le raccordement de la roue arrière et de la roue avant, et est configuré de manière telle que, lorsqu'on atteint un degré de remplissage ou volume restant prédéterminé de l'accumulateur (12, 13, 26), l'arrivée de fluide de pression sortant du frein de roue avant (4, 6) est coupée.

2. Système de freinage selon la revendication 1, caractérisé en ce que les soupapes hydrauliques (8 à 11) sont réalisées sous forme de dispositifs séparés de soupapes auxquels sont branchés les freins de roues respectifs (4 à 7) des roues, et qui sont respectivement composés de deux distributeurs 2/2 voies servant de soupapes d'admission et d'échappement, ou de distributeurs 3/3 voies (8 à 11), les deux soupapes d'échappement d'un circuit de freinage ou les deux voies d'échappement des soupapes étant relié(e)s aux accumulateurs basse pression communs respectifs (12, 13, 26).

3. Système de freinage selon la revendication 2, caractérisé en ce que les accumulateurs basse pression (12, 13, 26) sont raccordés au circuit de freinage associé (I, II) par l'intermédiaire d'un clapet de non-retour (14, 15) qui s'ouvre en direction du générateur (1) de pression de freinage.

4. Système de freinage selon la revendication 1 ou 2, caractérisé en ce que les accumulateurs basse pression (12, 13, 26) sont vidangés via les soupapes hydrauliques qui, à cette fin, sont commutées après le relâchement du frein, via un signal d'une durée prédéterminée, ou via des signaux émis sous forme d'une série d'impulsions.

5. Système de freinage selon l'une ou plusieurs des revendications 1 à 4, caractérisé en ce que le degré de remplissage de l'accumulateur basse pression (12, 13, 26) est déterminé approximativement par mesure et analyse des grandeurs déterminant le flux de fluide de pression alimentant l'accumulateur basse pression (12, 13, 26).

6. Système de freinage selon la revendication 5, caractérisé en ce que, pour déterminer le degré de remplissage, on analyse les temps de commande des soupapes, la pression de freinage ou une grandeur représentant indirectement la pression de freinage, en prenant en compte les courbes caractéristiques des soupapes et/ou du système, par exemple les courbes caractéristiques des accumulateurs basse pression.

7. Système de freinage selon l'une ou plusieurs des revendications 1 à 4, caractérisé en ce que l'accumulateur basse pression (12, 13, 26) comporte un piston (18, 19, 27) pouvant être déplacé à l'encontre de la pression d'un ressort (16, 17, 28) lorsqu'il absorbe un volume, la position et la course du piston étant mesurées à l'aide d'un capteur de déplacement.

8. Système de freinage selon la revendication 7, caractérisé en ce que le piston (18, 19) de l'accumulateur basse pression (12, 13) est relié à un élément de soupape (24, 25) qui coupe l'arrivée de fluide de pression du frein de roue avant (4, 6) vers l'accumulateur basse pression (12, 13) dès que le piston (18, 19) atteint une position qui correspond à un degré de remplissage prédéterminé.

9. Système de freinage selon l'une ou plusieurs des revendications 1 à 8, caractérisé en ce que des circuits de commande ou, en cas d'utilisation de commandes programmables, des étapes de commande sont prévu(e)s, qui limitent l'évacuation de fluide de pression vers l'accumulateur basse pression (12, 13, 26), après le début d'une opération de régulation antiblocage des roues, grâce à l'une ou plusieurs des mesures suivantes:
- diminution de la fréquence de régulation au fur et à mesure que la durée de la régulation antiblocage des roues se prolonge,
- réglage d'une pression à peu près constante au niveau de l'essieu arrière,
- augmentation des seuils de régulation de glissement des roues en fonction de l'état de la route, pour une ou plusieurs roues,
- réduction de la fonction de régulation au niveau des roues avant lorsque la vitesse du véhicule diminue.

10. Système de freinage selon l'une ou plusieurs des revendications 1 à 9, caractérisé en ce que les soupapes hydrauliques (8 à 11) sont prévues sous forme de soupapes distributrices multi-voies à commande électrique, qui provoquent une modification prédéterminée de la pression en fonction de leur commande.

11. Système de freinage selon l'une ou plusieurs des revendications 1 à 10, caractérisé en ce que la stratégie de régulation ou philosophie de régulation est modifiée par paliers multiples en fonction du taux de remplissage des accumulateurs basse pression (12, 13, 26) et/ou de la durée de la régulation antiblocage des roues, d'une fonction de régulation antiblocage des roues sans restriction, dans laquelle le débit de fluide de pression lors de la réduction de pression n'est pas restreint, jusqu'à un mode de régulation à faible débit de fluide de pression.
